# EUROPEAN PATENT SPECIFICATION

(11) **EP 2 805 992 B1**
(45) Date of publication and mention of the grant of the patent: **05.09.2018**
(21) Application number: 14160902.4
(22) Date of filing: 20.03.2014
(51) Int. Cl.: C08K 7/14

(54) **Concentrate for preparing a sealing solution for sealing mail pieces using tap water and method of making same**
Konzentrat zur Herstellung einer Versiegelungslösung zum Versiegeln von Poststücken mit Leitungswasser und Herstellungsverfahren dafür
Concentré pour préparer une solution d'étanchéité permettant de sceller des pièces de courrier au moyen d'eau du robinet et son procédé de fabrication

(30) Priority: 22.03.2013 US 201313849046
(43) Date of publication of application: 26.11.2014
(73) Proprietor: Pitney Bowes Inc., Shelton, CT 06484 (US)
(72) Inventor: Ryan, Michael S., Newtown, Connecticut 06470 (US)
(74) Representative: Hoffmann Eitle

(56) References cited:
- US-A- 5 108 505

## Description

This invention is concerned with sealing solutions such as those used in mailing systems to moisten envelope flaps for sealing, and more particularly to a method for preparing a powder mixture whose hydration with tap water forms such a sealing solution.

Mailing systems, such as, for example, a mailing machine, often include different modules that automate the processes of producing mail pieces. The typical mailing machine includes a variety of different modules or sub-systems each of which performs a different task on the mail piece. The mail piece is conveyed downstream utilizing a transport mechanism, such as rollers or a belt, to each of the modules. Such modules could include, for example, a singulating module, i.e., separating a stack of mail pieces such that the mail pieces are conveyed one at a time along the transport path, a stripping/moistening module, i.e., stripping open the flap of an envelope, wetting and sealing the glued flap of an envelope, a weighing module, and a metering/printing module, i.e., applying evidence of postage to the mail piece. The exact configuration of the mailing machine is, of course, particular to the needs of the user. Other types of mailing systems, such as, for example, inserters, feed material from one or more trays to be inserted into awaiting envelopes whose flaps have been opened and then sealed when the contents have been inserted.

Typically, a stripping device includes a structure for deflecting a flap of a moving envelope away from the envelope's body to enable the moistening and sealing process to occur. The deflecting structure typically includes a stripper blade that becomes inserted between the flap of the envelope and the body of the envelope as the envelope traverses the transport deck of the mailing machine. Once the flap has been stripped, a moistening device moistens the glue line on the envelope flap with a sealing solution (sometimes also referred to as a moistening solution) in preparation for sealing the envelope. Typically, a sealing solution is deposited onto the envelope flap to activate the glue. The flap is then closed and sealed, such as, for example, by passing the closed envelope through a nip of a sealer roller to compress the envelope and flap together, and the envelope passed to the next module for continued processing.

The present invention provides a method for preparing a powder mixture from which a moistening/sealing solution can be prepared by hydration with standard tap (mineralized) water without the associated problems of scale formation.

According to a first aspect, the present invention provides a method for preparing a powder mixture comprising combining an acid buffer, a biocide and a dye,
wherein the acid buffer is:
(i) a citric acid/sodium citrate buffer,
(ii) a potassium hydrogen phthalate/hydrochloric acid buffer,
(iii) a hydrochloric acid/sodium citrate buffer, or
(iv) a citric acid/sodium hydrogen phosphate buffer.

Preferably the method further comprises combining an anti-scalant with the acid buffer, biocide and dye.

Preferably the biocide is a blend of alkyl dimethyl benzyl ammonium chlorides.

Preferably the powder mixture comprises:
87 % by weight or more of the acid buffer;
32-875 ppm by weight of the dye and
10-279 ppm by weight of the biocide.

Preferably the powder mixture further comprises an anti-scalant in an amount up to 10% by weight.

Preferably the acid buffer, biocide and/or the dye, more preferably at least the biocide, is initially in the form of a solution and the method comprises the steps of:
combining the acid buffer, the biocide and the dye to form a mixture,
drying the mixture to form a powder; and
triturating the dried powder to prepare the powder mixture.

According to a second aspect, the present invention provides a method for preparing a solution for sealing mail pieces comprising the steps of:
preparing a powder mixture in accordance with the above first aspect, and
hydrating the powder mixture with tap water to prepare a sealing solution having a pH in the range of from 2 to 5.

According to a third aspect, the present invention provides a method for preparing a gel pack comprising the steps of:
preparing a powder mixture in accordance with the above first aspect, and
encapsulating the powder mixture in a water-soluble gel pack.

According to a fourth aspect, the present invention provides a method for preparing a solution for sealing mail pieces comprising the steps of:
preparing a gel pack in accordance with the above third aspect, and
dissolving the gel pack in tap water to prepare a sealing solution having a pH in the range of from 2 to 5.

According to a fifth aspect, the present invention provides a powder mixture comprising:
32-875 ppm by weight of a dye,
10-279 ppm by weight of a biocide, and
87 % by weight or more of an acid buffer selected from:
   (i) a citric acid/sodium citrate buffer,
   (ii) a potassium hydrogen phthalate/hydrochloric acid buffer,
   (iii) a hydrochloric acid/sodium citrate buffer, and
   (iv) a citric acid/sodium hydrogen phosphate buffer.

The acid buffer in the powder mixture keeps minerals in the tap water dissolved in the sealing solution, thereby preventing the build up of solid scale that would otherwise clog the filters present in the sealing module of a mailing system. Additionally, use of the acid buffer assures that the sealing solution will maintain an acidic pH in nearly all tap waters, regardless of their initial pH. In some embodiments, an anti-scalant can also be added to reduce scaling when the tap water used to hydrate the mixture has a high mineral content (commonly referred to as "hard water").

Additional aspects and advantages of the invention are set forth in the description that follows.

The accompanying drawings, together with the general description given above and the detailed description given below, serve to explain the principles of the invention. As shown throughout the drawings, like reference numerals designate like or corresponding parts.
FIG. 1 illustrates a mailing machine in which the sealing solution of the present invention can be utilized; and
FIG. 2 illustrates a portion of a moistening system in which the sealing solution of the present can be utilized.

The present invention provides a method for preparing a powder mixture, hydration of which using standard tap (mineralized) water forms a mail piece sealing solution which does not suffer from problems associated with scale formation. Prior art moistening/sealing solutions are comprised of deionized water, biocide and dye as illustrated in US5108505. Deionized water is necessary to prevent scale formation, which clogs filters and hinders proper sealing. A biocide is necessary to prevent biological growth, and the dye is important to distinguish the product from standard water and for safety reasons to guard against the product being accidentally ingested. The volume and weight of such solutions, however, render them highly inefficient to ship and requires large inventory space, as they are provided only in a liquid form ready for use. A concentrated version in the form of a powder, optionally encapsulated in a water soluble gel pack, would be far more efficient to ship and store, and be more environmentally friendly due to transportation fuel savings. A difficulty with using such a powder is that deionized water is generally not available at customer locations. Use of tap water to prepare a solution from a concentrate comprising just a biocide and a dye would lead to the formation of scale in the sealing unit of a mailing system. This scaling can quickly hinder the flow of sealing solution through the sealer filter and pad, leading to poor sealing and ultimately shutting down the sealing operation.

This potential scaling problem caused by the use of tap water to prepare a moistening/sealing solution is solved according to the present invention by using a powder mixture comprising an acid buffer mixed with a biocide and a dye. A preferred composition of such a powder mixture is provided in Table 1 below. This composition is intended for hydration with tap water, particularly one litre of tap water, to yield a sealing solution.

**Table 1**

| General formulation of a powder mixture | |
|---|---|
| Component | Amount |
| Acid Buffer | 87 - <100% |
| Dye | 32-875 parts per million (ppm) |
| Biocide | 10-280 parts per million (ppm) |

In the preparation of the powder mixture, the biocide may be initially provided in the form of a solution as may also the dye and/or the acid buffer. Accordingly, the method provided by the present invention may include the steps of combining the acid buffer, the biocide and the dye to form a solution, at least one of the dye, acid buffer and biocide being provided in the form of a solution. The resulting solution comprising the dye, acid buffer and biocide is then dried to form a powder which may then be triturated to prepare the powder mixture.

The acid buffer must be non-toxic, quickly soluble, and be compatible with all materials with which it comes into contact. The acid buffer is selected such that when hydrated to form the sealing solution, it will result in the sealing solution having a pH below 5 and preferably below 4, yet above 2 for safety reasons. The acid buffer will keep dissolved the minerals present in tap water used to hydrate the powder mixture to prepare the sealing solution, thereby preventing the formation of solid scale that would otherwise clog the filters in the sealing module of a mailing system. The acid buffer is:
(i) a citric acid/sodium citrate buffer,
(ii) a potassium hydrogen phthalate/hydrochloric acid buffer,
(iii) a hydrochloric acid/sodium citrate buffer, or
(iv) a citric acid/sodium hydrogen phosphate buffer.

Tables 2 and 3 below provide illustrative examples of the materials and amounts that can be utilized to make a powder mixture according to the present invention. These materials are combined, dried and then triturated to prepare a powder mixture (abbreviated as P.M. in Tables 2 and 3) which, when dissolved in one litre of tap (mineralized) water, prepares a sealing solution (abbreviated as S.S. in Tables 2 and 3). The biocide in each of these examples is preferably a blend of alkyl dimethyl benzyl ammonium chlorides, such as, for example, Hyamine 3500-80% (0.5% solution in DI Water), and the dye is preferably FD&C Blue Dye #1 (1.5% solution in DI Water).

**TABLE 2**

| Citric Acid/Sodium Hydrogen Phosphate (NaHPO₄) Buffered Mixture Ingredients | | | | | | | | | | | |
|---|---|---|---|---|---|---|---|---|---|---|---|
| Citric Acid Wt., grams | NaHPO₄ Wt., grams | Biocide Solution Wt., grams | Dye Solution Wt., grams | pH | Molarity (mM) | Biocide | | Buffer | | Dye | |
| | | | | | | ppb in conc | ppb in sol | % in conc | % in sol | ppm in conc | ppm in sol |
| 0.08 | 0.08 | 0.0128 | 0.0107 | 4 | 1 | 279,019 | 51 | 87.19 | 0.016 | 875 | 0.1605 |
| 0.84 | 0.78 | 0.0128 | 0.0107 | 4 | 10 | 31,153 | 51 | 98.57 | 0.162 | 98 | 0.1605 |
| 0.13 | 0.05 | 0.0128 | 0.0107 | 3 | 1 | 251,597 | 51 | 88.45 | 0.018 | 789 | 0.1605 |
| 1.27 | 0.48 | 0.0128 | 0.0107 | 3 | 10 | 28,869 | 51 | 98.67 | 0.175 | 90 | 0.1605 |

**TABLE 3**

| Citric Acid/Sodium Citrate Buffered Mixture Ingredients | | | | | | | | | | | |
|---|---|---|---|---|---|---|---|---|---|---|---|
| Citric Acid Wt., grams | Na Citrate Wt., grams | Biocide Solution Wt., grams | Dye Solution Wt., grams | pH | Molarity (mM) | Biocide | | Buffer | | Dye | |
| | | | | | | ppb in conc | ppb in sol | % in conc | % in sol | ppm in conc | ppm in sol |
| 0.13 | 0.11 | 0.0128 | 0.0107 | 4 | 1 | 194,307 | 51 | 91.08 | 0.024 | 609 | 0.1605 |
| 1.31 | 1.11 | 0.0128 | 0.0107 | 4 | 10 | 20,954 | 51 | 99.04 | 0.242 | 66 | 0.1605 |
| 0.18 | 0.04 | 0.0128 | 0.0107 | 3 | 1 | 210,267 | 51 | 90.35 | 0.022 | 659 | 0.1605 |
| 1.80 | 0.43 | 0.0128 | 0.0107 | 3 | 10 | 22,720 | 51 | 98.96 | 0.223 | 71 | 0.1605 |

A preferred procedure for preparing the powdered mixture is to combine the acid buffer (which includes an acid and a salt), biocide solution and dye solution, and thoroughly mix the wetted powder. The wetted powder is then dried in a manner that will not melt the powder, such as, for example, by desiccation or warm air drying to reduce any water content to a minimal amount. The resulting dried powder is preferably then triturated to reduce the particle size and thoroughly homogenize the particles. Reduction of the particle size helps to rapidly dissolve the powder mixture when hydrated with tap water.

Each of the dried powder mixtures formed from the ingredients listed in Tables 2 and 3 above can be hydrated with one litre of tap water to produce a sealing solution. It should be noted that the dye used in the examples illustrated in Tables 2 and 3 above is initially provided in the form of a solution to aid in measurement and handling of such a small amount of dye. It should be understood that a powdered dye could also be used when preparing larger amounts of powder mixture, as the larger amount of dye required would enable it to be accurately measured and handled. Preferably, the lower pH/higher molarity formulations should be used with particularly hard water while higher pH/lower molarity formulations may be even more economical and still useful with soft water. In this regard different tap waters around the world have differing levels and types of hardness.

Optionally, an anti-scalant such as an anionic polyacrylic acid (poly (acrylamide-acrylic acid)) can be added for use in areas with especially hard water during the step of combining the acid buffer, biocide and dye. The amount of anti-scalant is preferably in the range of 0-10% by weight, more preferably 0.01-10% by weight, for the formulations provided in Tables 1-4 above.

In a preferred aspect of the invention, the powder mixture is encapsulated in a water soluble gel pack. The gel pack, prior to encapsulation of the powder mixture, is of known type and is water soluble. The filled gel pack is typically dissolvable in a litre of tap water to prepare a sealing solution having a pH in the range of from 2 to 5.

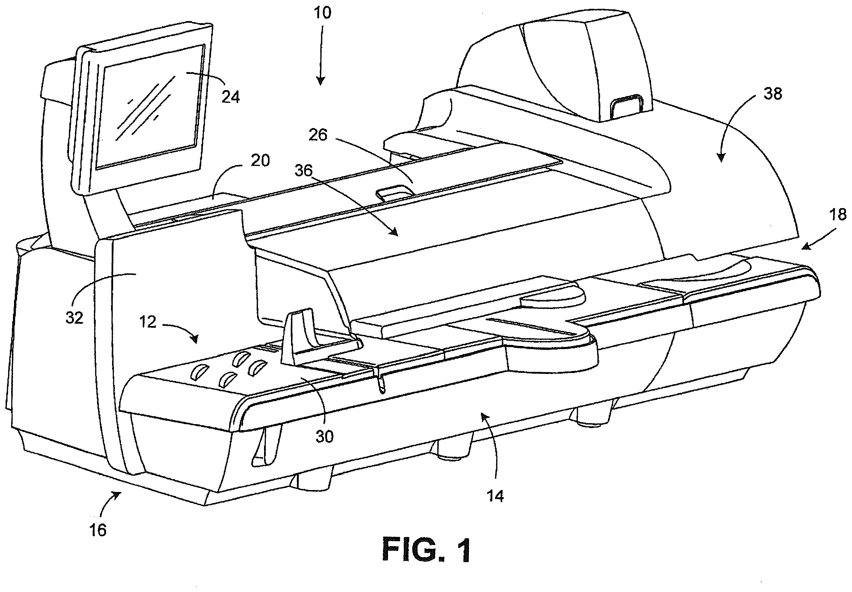

Fig. 1 illustrates a mailing machine 10 that includes a moistening system in which a sealing solution according to the present invention can be utilized. Mailing machine 10 comprises a base unit, designated generally by the reference numeral 14, the base unit 14 having a mail piece input end, designated generally by the reference numeral 16, and a mail piece output end, designated generally by the reference numeral 18. A control unit 20 is mounted on the base unit 14, and includes one or more input/output devices, such as, for example, a touch-screen display device 24. One or more cover members 26 are pivotally mounted on the base 14 so as to move from the closed position shown in Fig. 1 to an open position (not shown) to expose various operating components and parts for service and/or repair as needed.

The base unit 14 further includes a horizontal feed deck 30 which extends substantially from the input end 16 to the output end 18. A plurality of nudger rollers 12 are suitably mounted under the feed deck 30 and project upwardly through openings in the feed deck so that the periphery of the rollers 12 is slightly above the upper surface of the feed deck 30 and can exert a forward feeding force on a succession of mail pieces placed in the input end 16. A registration wall 32 defines a mail piece registration surface substantially perpendicular to the feed deck 30 that extends substantially from the input end 16 to the output end 18. Mail pieces placed in the input end 16 are fed by the nudger rollers 12 along the feed deck 30, with the top edge of the mail piece being registered against the wall 32. The mail pieces may be passed through one or more modules, such as, for example, a singulator module and moistening module. Each of these modules is located generally in the area indicated by reference numeral 36. The mail pieces are then passed to a metering/printing module located generally in the area indicated by reference numeral 38.

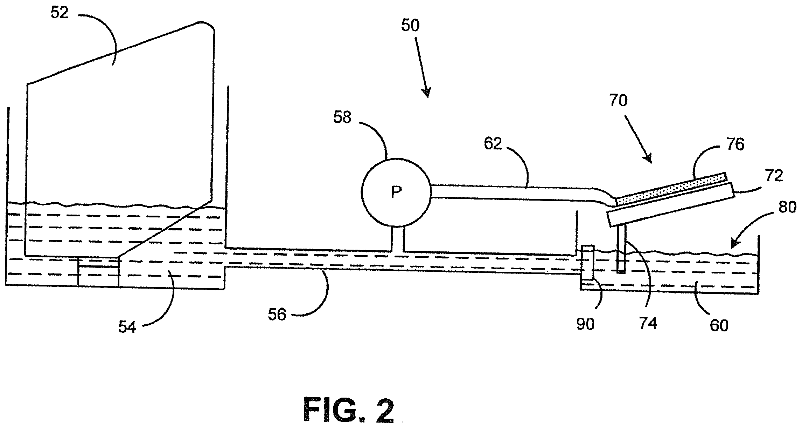

While Fig. 1 illustrates a mailing machine, it should be understood that the use of sealing solution of the present invention is not so limited and it can be utilized with any device that has a moistening/sealing system, such as, for example, an inserter and the like. Referring now to Fig. 2, there is illustrated in block diagram form a moistening system 50 in which the sealing solution according to the present invention can be utilized. System 50 includes a replaceable bottle 52 that can be inserted into a reservoir 54. Reservoir 54 is preferably mounted in, for example, the base unit of the mailing machine 10. Under normal operation, the sealing solution, produced using the concentrate of the present invention, contained in the bottle 52 empties into the reservoir 54. The reservoir 54 supplies the sealing solution via tubing 56 to a pump 58 and a well 60. Pump 58, via tubing 62, supplies the sealing solution to a moistening device 70. Moistening device 70 includes a wetting element 72, typically formed from a contact media such as foam or felt, which is secured to the trailing edge of a stripping blade (not shown). The wetting element 72 is supplied with sealing solution, through physical contact with a wick 74, a portion of which is located in the sealing solution 80 contained in the well 60, and capillary action of the sealing solution. The wetting element is also supplied with sealing solution via the pump 58 which supplies the sealing solution to a discharge device 76 that includes a series of openings or nozzles to distribute sealing solution onto the wetting element 72.

As an envelope passes through the moistening device 70, the inside of the envelope flap, where the glue line for sealing the flap is located, contacts the wetting element 72, such that the wetting element 72 transfers sealing solution to the flap to activate the glue. The moistening device 70 illustrated in Fig. 2 is a contact moistening system, in which sealing solution is deposited onto the glue line on a flap of an envelope by contacting the glue line with a wetting element. It should be understood, however, that the sealing solution of the present invention could also be used with other types of moistening devices, such as, for example, a non-contact moistening device, in which sealing solution is sprayed directly onto the envelope flap with a nozzle and mechanical pump system. The mechanical pump is supplied with sealing solution from a reservoir and sprays the fluid through the nozzles and onto the envelope flap.

While preferred embodiments of the invention have been described and illustrated above, it should be understood that these are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A method for preparing a powder mixture comprising combining an acid buffer, a biocide and a dye,
wherein the acid buffer is:
(i) a citric acid/sodium citrate buffer,
(ii) a potassium hydrogen phthalate/hydrochloric acid buffer,
(iii) a hydrochloric acid/sodium citrate buffer, or
(iv) a citric acid/sodium hydrogen phosphate buffer.

2. A method according to Claim 1, further comprising combining an anti-scalant with the acid buffer, biocide and dye.

3. A method according to Claim 1 or Claim 2, wherein the biocide is a blend of alkyl dimethyl benzyl ammonium chlorides.

4. A method according to any preceding claim, wherein the powder mixture comprises:
87 % by weight or more of the acid buffer;
32-875 ppm by weight of the dye and
10-279 ppm by weight of the biocide.

5. A method according to Claim 4, wherein the powder mixture further comprises an anti-scalant in an amount of up to 10% by weight of the powder mixture.

6. A method according to any preceding claim, comprising the steps of:
combining the acid buffer, the biocide and the dye, at least one of which is in the form of a solution, to form a mixture,
drying the mixture to form a powder; and
triturating the dried powder to prepare the powder mixture.

7. A method according to Claim 6, wherein the biocide is initially provided in the form of a biocide solution.

8. A method for preparing a solution for sealing mail pieces comprising the steps of:
preparing a powder mixture by the method defined in any preceding claim, and
hydrating the powder mixture with tap water to prepare a sealing solution having a pH in the range of from 2 to 5.

9. A method for preparing a gel pack comprising the steps of:
preparing a powder mixture by the method defined in any of Claims 1-7, and
encapsulating the powder mixture in a water-soluble gel pack.

10. A method for preparing a solution for sealing mail pieces comprising the steps of:
preparing a gel pack by the method defined in Claim 9, and
dissolving the gel pack in tap water to prepare a sealing solution having a pH in the range of from 2 to 5.

11. A powder mixture comprising:
32-875 ppm by weight of a dye,
10-279 ppm by weight of a biocide, and
87 % by weight or more of an acid buffer selected from:
(i) a citric acid/sodium citrate buffer,
(ii) a potassium hydrogen phthalate/hydrochloric acid buffer,
(iii) a hydrochloric acid/sodium citrate buffer, and
(iv) a citric acid/sodium hydrogen phosphate buffer.

12. A powder mixture according to Claim 11, further comprising an anti-scalant in an amount of up to 10 % by weight of the powder mixture.

## Patentansprüche

1. Verfahren zur Herstellung einer Pulvermischung, umfassend das Kombinieren eines sauren Puffers, eines Biozids und eines Farbstoffs,
wobei der saure Puffer:
(i) ein Zitronensäure/Natriumcitrat-Puffer,
(ii) ein Kaliumhydrogenphthalat/Salzsäure-Puffer,
(iii) ein Salzsäure/Natriumcitrat-Puffer oder
(iv) ein Zitronensäure/Natriumhydrogenphosphat-Puffer ist.

2. Verfahren nach Anspruch 1, weiter umfassend das Kombinieren eines Ablagerungsverhinderungsmittels mit dem sauren Puffer, dem Biozid und dem Farbstoff.

3. Verfahren nach Anspruch 1 oder Anspruch 2, wobei das Biozid ein Gemisch von Alkyldimethylbenzylammoniumchloriden ist.

4. Verfahren nach einem der vorstehenden Ansprüche, wobei die Pulvermischung:
87 Gew.-% oder mehr des sauren Puffers;
32-875 Gew.-ppm des Farbstoffs und
10-279 Gew.-ppm des Biozids
umfasst.

5. Verfahren nach Anspruch 4, wobei die Pulvermischung weiter ein Ablagerungsverhinderungsmittel in einer Menge von bis zu 10 Gew.-% der Pulvermischung umfasst.

6. Verfahren nach einem der vorstehenden Ansprüche, umfassend die Schritte des:
Kombinierens des sauren Puffers, des Biozids und des Farbstoffs, von denen wenigstens einer bzw. eines in Form einer Lösung vorliegt, zur Bildung einer Mischung,
Trocknens der Mischung zur Bildung eines Pulvers und des Pulverisierens des getrockneten Pulvers zur Herstellung der Pulvermischung.

7. Verfahren nach Anspruch 6, wobei das Biozid anfänglich in Form einer Biozidlösung bereitgestellt wird.

8. Verfahren zur Herstellung einer Lösung zum Versiegeln von Poststücken, umfassend die Schritte des:
Herstellens einer Pulvermischung durch das in einem der vorstehenden Ansprüche definierte Verfahren und des
Hydratisierens der Pulvermischung mit Leitungswasser zur Herstellung einer Versiegelungslösung mit einem pH-Wert im Bereich von 2 bis 5.

9. Verfahren zur Herstellung einer Gelpackung, umfassend die Schritte des:
Herstellens einer Pulvermischung durch das in einem der Ansprüche 1-7 definierte Verfahren und des
Verkapselns der Pulvermischung in einer wasserlöslichen Gelpackung.

10. Verfahren zur Herstellung einer Lösung zum Versiegeln von Poststücken, umfassend die Schritte des:
Herstellens einer Gelpackung durch das in Anspruch 9 definierte Verfahren und des
Auflösens der Gelpackung in Leitungswasser zur Herstellung einer Versiegelungslösung mit einem pH-Wert im Bereich von 2 bis 5.

11. Pulvermischung, umfassend:
32-875 Gew.-ppm eines Farbstoffs,
10-279 Gew.-ppm eines Biozids und
87 Gew.-% oder mehr eines sauren Puffers, ausgewählt aus:
(i) einem Zitronensäure/Natriumcitrat-Puffer,
(ii) einem Kaliumhydrogenphthalat/Salzsäure-Puffer,
(iii) einem Salzsäure/Natriumcitrat-Puffer und
(iv) einem Zitronensäure/Natriumhydrogenphosphat-Puffer.

12. Pulvermischung nach Anspruch 11, weiter umfassend ein Ablagerungsverhinderungsmittel in einer Menge von bis zu 10 Gew.-% der Pulvermischung.

## Revendications

1. Procédé de préparation d'un mélange pulvérulent comprenant la combinaison d'un tampon acide, d'un biocide et d'un colorant,
dans lequel le tampon acide est :
(i) un tampon acide citrique/citrate de sodium,
(ii) un tampon phtalate acide de potassium/acide chlorhydrique,
(iii) un tampon acide chlorhydrique/citrate de sodium, ou
(iv) un tampon acide citrique/phosphate acide de sodium.

2. Procédé selon la revendication 1, comprenant en outre la combinaison d'un agent anti-tartre avec le tampon acide, le biocide et le colorant.

3. Procédé selon la revendication 1 ou la revendication 2, dans lequel le biocide est un mélange de chlorures d'alkyldiméthylbenzylammonium.

4. Procédé selon l'une quelconque des revendications précédentes, dans lequel le mélange pulvérulent comprend :
87 % en poids ou plus du tampon acide,
32 à 875 ppm en poids du colorant, et
10 à 279 ppm en poids du biocide.

5. Procédé selon la revendication 4, dans lequel le mélange pulvérulent comprend en outre un agent anti-tartre en une quantité allant jusqu'à 10 % en poids du mélange pulvérulent.

6. Procédé selon l'une quelconque des revendications précédentes, comprenant les étapes de :
combinaison du tampon acide, du biocide et du colorant, dont au moins un est sous la forme d'une solution, pour former un mélange,
séchage du mélange pour former une poudre ; et
trituration de la poudre séchée pour préparer le mélange pulvérulent.

7. Procédé selon la revendication 6, dans lequel le biocide est initialement fourni sous la forme d'une solution de biocide.

8. Procédé de préparation d'une solution pour sceller des pièces de courrier comprenant les étapes de :
préparation d'un mélange pulvérulent par le procédé défini dans l'une quelconque des revendications précédentes, et
hydratation du mélange pulvérulent avec de l'eau du robinet pour préparer une solution d'étanchéité ayant un pH dans la plage de 2 à 5.

9. Procédé de préparation d'une poche de gel comprenant les étapes de :
préparation d'un mélange pulvérulent par le procédé défini dans l'une quelconque des revendications 1 à 7,
et
encapsulation du mélange pulvérulent dans une poche de gel hydrosoluble.

10. Procédé de préparation d'une solution pour sceller des pièces de courrier comprenant les étapes de :
préparation d'une poche de gel par le procédé défini dans la revendication 9, et
dissolution de la poche de gel dans de l'eau du robinet pour préparer une solution d'étanchéité ayant un pH dans la plage de 2 à 5.

11. Mélange pulvérulent comprenant :
32 à 875 ppm en poids d'un colorant,
10 à 279 ppm en poids d'un biocide, et
87 % en poids ou plus d'un tampon acide choisi parmi :
(i) un tampon acide citrique/citrate de sodium,
(ii) un tampon phtalate acide de potassium/acide chlorhydrique,
(iii) un tampon acide chlorhydrique/citrate de sodium, et
(iv) un tampon acide citrique/phosphate acide de sodium.

12. Mélange pulvérulent selon la revendication 11, comprenant en outre un agent anti-tartre en une quantité allant jusqu'à 10 % en poids du mélange pulvérulent.
